# EUROPÄISCHE PATENTSCHRIFT

(11) **EP 2 743 130 B1**
(45) Veröffentlichungstag und Bekanntmachung des Hinweises auf die Patenterteilung: **06.01.2021**
(21) Anmeldenummer: 13191255.2
(22) Anmeldetag: 01.11.2013
(51) Int. Cl.: B60W 30/12, B60Q 1/08, B60Q 1/26

(54) **Verfahren und Vorrichtung zum Steuern einer Lichtverteilung einer Leuchte eines Fahrzeugs**
Method and device for controlling a light distribution from the lamp of a vehicle
Procédé et dispositif de commande de la distribution lumineuse d'une lampe d'un véhicule

(30) Priorität: 17.12.2012 DE 102012024666
(43) Veröffentlichungstag der Anmeldung: 18.06.2014
(73) Patentinhaber: Volkswagen Aktiengesellschaft, 38440 Wolfsburg (DE)
(72) Erfinder: Böttcher, Anja, 37197 Hattorf (DE); Förderer, Hans-Joachim, 38461 Danndorf (DE)

(56) Entgegenhaltungen:
- DE-A1-102006 004 772
- DE-A1-102008 062 642
- GB-A- 2 337 578
- JP-A- 2010 069 921
- US-A1- 2002 080 618
- US-A1- 2007 115 357
- US-A1- 2008 043 099

## Beschreibung

Die vorliegende Erfindung betrifft ein Verfahren und eine Vorrichtung zum Steuern einer Lichtverteilung einer Leuchte eines Fahrzeugs.

Bei Schlechtwetterbedingungen sind Fahrzeuge in der Regel aufgrund eingeschränkter Sichtverhältnisse schlecht sichtbar. Zwar sind Fahrzeuge mit einer Nebelschlussleuchte ausgestattet, die bei hoher Sichtbehinderung durch Nebel die Sichtbarkeit des Fahrzeugs erhöht, diese darf aber aufgrund hoher Blendungsgefahr für andere Verkehrsteilnehmer erst eingeschaltet werden, wenn die Sichtweite unterhalb einer gesetzlich vorgeschriebenen Grenze liegt. In der Regel ist dabei vom Fahrzeugführer selbst zu beurteilen, ob die Sichtweite bereits unterhalb der gesetzlich vorgeschriebenen Sichtweite liegt. Weiterhin darf die Nebelschlussleuchte in der Regel nicht bei starkem Regen oder Schnee eingeschaltet werden. Sind nun die Sichtverhältnisse schlecht, die Sichtweite aber noch oberhalb der gesetzlich vorgeschriebenen Sichtweite für das Einschalten der Nebelschlussleuchte, wird die Intensität beispielsweise der Rücklichter in der Regel bei schlechten Sichtverhältnissen nicht verändert. Es ist allerdings bekannt, aufgrund sich ändernder Sichtverhältnisse bestimmte Lichtfunktionen anzuschalten. Dabei werden häufig separat im Fahrzeug verbaute Sensoren verwendet.

Die WO 2011/127895 A1 beschreibt ein Verfahren und eine Vorrichtung zur Fahrerunterstützung beim Fahren eines Fahrzeugs durch Detektion von wetterbedingten Sichteinschränkungen. Dabei kann automatisch ein Nebellichtfunktion, ein Scheibenwischer oder eine Scheibenheizung aktiviert werden.

Die DE 60 2005 004 156 T2 beschreibt einen optischen Multifunktionssensor für Fahrerassistenzsysteme in Kraftfahrzeugen. Der Multifunktionssensor kann Wetterverhältnisse im Fahrzeugumfeld detektieren. Bei Erfassen von Nebel können die Nebelleuchten automatisch eingeschaltet werden.

Ferner beschreibt die DE 10 2010 032 858 A1 ein Verfahren zum automatischen Betätigen eines Scheibenwischers eines Fahrzeugs. Dabei wird automatisch eine Feuchtigkeitsmenge auf einer Windschutzscheibe des Fahrzeugs, eine Umgebungshelligkeit und eine Bildinformation von einem Bereich in Fahrtrichtung vor dem Fahrzeug erfasst. Die Scheibenwischersteuerung kann beispielsweise auch mit einer Bilderfassungsvorrichtung und einer Bildverarbeitungsvorrichtung eines anderen Assistenzsystems verwendet werden.

GB 2337578 A beschreibt ein System zur Steuerung der Beleuchtung von Fahrzeuglampen basierend auf erkannten Wetter- und Straßenoberflächenbedingungen.

DE 10 2006 004772 A1 offenbart ein Fahrerassistenzsystem mit zumindest Fahrerassistenzfunktionen wie LDW (Lane Departure Warning) und LKS (Lane Keeping Support). Die Aktivierung bzw. Deaktivierung der Fahrerassistenzfunktionen (LDW, LKS) ist von einem Vertrauensmaß abhängig, der unter anderem auch von den Wetterbedingungen abhängig ist.

Der vorliegenden Erfindung liegt die Aufgabe zugrunde, ein Verfahren und eine Vorrichtung der eingangs genannten Art bereitzustellen, welche es erlauben, in Abhängigkeit von den Wetterverhältnissen, die in der Umgebung des Fahrzeugs herrschen, die Lichtverteilung einer Leuchte des Fahrzeugs zu steuern. Dies soll auf platzsparende und kostengünstige Weise verwirklicht werden.

Erfindungsgemäß wird diese Aufgabe durch ein Verfahren mit den Merkmalen des Anspruchs 1 und einer Vorrichtung mit den Merkmalen des Anspruchs 5 gelöst. Vorteilhafte Ausgestaltungen und Weiterbildungen ergeben sich aus den abhängigen Ansprüchen.

Bei dem erfindungsgemäßen Verfahren wird ein Fahrerassistenzsystem betrieben, das der Führung des Fahrzeugs auf der Fahrbahn dient. Dabei umfasst das Fahrerassistenzsystem zumindest einen Sensor, der einen optischen Parameter misst und der Messsignale bereitstellt, anhand derer das Fahrerassistenzsystem die Führung des Fahrzeugs auf der Fahrbahn steuert, wobei die Qualität der Messsignale des Sensors durch Wetterverhältnisse in der Umgebung des Fahrzeugs beeinflusst wird. Ferner wird die Ausgangslichtverteilung verändert, wenn die Qualität der Messsignale unterhalb eines Schwellenwerts liegt. Durch das erfindungsgemäße Verfahren werden vorteilhafterweise keine separaten Sensoren im Fahrzeug benötigt. Die gemeinsame Nutzung von Sensoren für verschiedene Funktionen des Fahrzeugs führt zu einer idealen Ausnutzung des Bauraums und Einsparung von Kosten, die durch die Verwendung mehrerer Sensoren entstehen würden.

Bei dem erfindungsgemäßen Verfahren werden somit vorteilhafterweise die indirekt über das Fahrerassistenzsystem erfassten Sichtverhältnisse zur Steuerung der Lichtverteilung der Leuchte verwendet.

Mit dem Begriff Fahrerassistenzsysteme werden heutzutage Systeme der aktiven Sicherheit, d.h. Systeme, die das Eintreten eines Unfalls verhindern, in Verbindung gebracht. Fahrerassistenzsysteme werden in der Regel nach unterschiedlichen Kriterien in Kategorien eingeteilt. Bei der Einteilung wird unterschieden, auf welcher von drei Ebenen der Fahraufgabe das Fahrerassistenzsystem agiert. Die drei Ebenen der Fahraufgabe sind dabei Stabilisierung, Bahnführung und Navigation. Fahrerassistenzsysteme, die der Bahnführung dienen, umfassen z.B. einen Sensor, der die Fahrbahnmarkierungen erkennt. Über die Fahrbahnmarkierungen kann beispielsweise der Spurhalteassistent erkennen, wenn ein Fahrzeug seine optimale Spur verlässt. Dies funktioniert allerdings nur dann einwandfrei, wenn die Fahrbahnmarkierungen auch eindeutig erfasst werden können. Bei Schlechtwetterverhältnissen, wie beispielsweise dichtem Nebel oder Schneefall, können die Fahrbahnmarkierungen allerdings nicht immer erkannt werden. Im Sinne der Erfindung sind unter Fahrerassistenzsystemen, die zur Führung des Fahrzeugs auf der Fahrbahn dienen, insbesondere Fahrerassistenzsysteme zu verstehen, die dazu beitragen, dass ein Fahrzeug seine Fahrspur nicht aus Versehen verlässt, und die gegebenenfalls regelnd in den Fahrbetrieb eingreifen können.

Der optische Parameter kann beispielsweise ein Lichtanteil des Umgebungslichts sein, der von den Fahrbahnmarkierungen in Richtung des Sensors reflektiert wird. Der in Richtung des Sensors reflektierte Lichtanteil kann allerdings auch von einer Scheinwerferanordnung des Fahrzeugs stammen. Der Sensor ist bevorzugt eine Kamera, mit der die Fahrbahnmarkierungen erfasst werden können. Durch die Erfassung der Fahrbahnmarkierungen werden Messsignale bereitgestellt, die die Führung des Fahrzeugs auf der Fahrbahn steuern. Mit zunehmendem Nebel wird allerdings die Erfassung der Fahrbahnmarkierungen immer schlechter. Die Qualität des Messsignals nimmt also ab.

Als Messsignale, die von dem Sensor bereitgestellt werden, können dann die von dem Sensor detektierten Helligkeiten von Lichtstreifen, die aufgrund der Reflektion von Licht an den Fahrbahnmarkierungen entstehen, sein. Ist der Sensor beispielsweise eine Kamera, so kann das Messsignal insbesondere über ein von der Kamera aufgenommenes Bild ermittelt werden.

Die Qualität der Messsignale kann beispielsweise die Stärke der Messsignale sein. So wird mit zunehmenden Nebel der von den Fahrbahnmarkierungen zum Sensor zurückreflektierte Lichtanteil immer schwächer, da das Licht der Scheinwerfer des Fahrzeugs bereits zurückreflektiert wird, bevor es auf die Fahrbahnmarkierung trifft, oder da Umgebungslicht, das von den Fahrbahnmarkierungen reflektiert wird, aufgrund des Nebels gar nicht erst bei dem Sensor ankommt.

Das Messsignal von den Fahrbahnmarkierungen wird also in Abhängigkeit von den Wetterverhältnissen immer schwächer. Alternativ kann auch ein Messsignal-zu-Rausch Verhältnis definiert werden, wobei ein klar sichtbarer Lichtstreifen einer Fahrbahnmarkierung als Messsignal dient, und ein durch Nebel diffus reflektiertes Licht dann ein Rauschen im Messsignal darstellt. Weiterhin kann auch ein Kontrast zwischen einem durch Reflektion von Licht an einer Fahrbahnmarkierung entstehenden Lichtstreifen und der die Fahrbahnmarkierung umgebende Bereiche auf der Fahrbahn gemessen werden. Wird dieser Kontrast immer schlechter, sinkt die Qualität des Messsignals. Die Qualität der Messsignale ist im Allgemeinen unabhängig von der Qualität des Sensors.

Gemäß einer Ausgestaltung des erfindungsgemäßen Verfahrens wird die Ausgangslichtverteilung wieder hergestellt, wenn die Qualität des Messsignals wieder oberhalb des Schwellenwerts liegt. Damit wird vorteilhafterweise sichergestellt, dass bei normalen Wetterbedingungen und Sichtverhältnissen andere Verkehrsteilnehmer nicht geblendet werden.

Gemäß des erfindungsgemäßen Verfahrens wird das Fahrerassistenzsystem ausgeschaltet, wenn die Qualität des Messsignals unterhalb des Schwellenwerts liegt. Der Schwellenwert wird bevorzugt so definiert, dass er eine Qualität des Messsignals beschreibt, bei dem das Fahrerassistenzsystem nicht mehr sicher funktioniert. Das Fahrerassistenzsystems wird dann nämlich tatsächlich nur dann ausgeschaltet, wenn es aufgrund der vorherrschenden Wetterverhältnisse seine Funktion nicht mehr ausüben kann. In diesem Fall wird dann die Ausgangslichtverteilung der Leuchte verändert, um den schlechteren Sichtverhältnissen Rechnung zu tragen.

In einer anderen Ausgestaltung des Verfahrens wird das Fahrerassistenzsystem mit einer Funktion des Fahrzeugs gekoppelt, die eine Sichtbeeinträchtigung durch die Wetterverhältnisse vermindert. Diese Funktion ist in Abhängigkeit von den Sichtverhältnissen einschaltbar. Wenn die Qualität der Messsignale unterhalb des Schwellenwerts liegt, wird die Ausgangslichtverteilung in diesem Fall nur dann verändert, wenn die Funktion eingeschaltet ist. Bevorzugt handelt es sich bei der besagten Funktion um eine Scheibenwischerfunktion, die entweder automatisch oder manuell vom Fahrzeugführer eingeschaltet wird. Alternativ kann die Funktion auch eine Scheibenheizung sein. In dieser Ausgestaltung des erfindungsgemäßen Verfahrens wird vorteilhafterweise eine zweite Bedingung eingeführt, die erfüllt sein muss, dass die Lichtverteilung der Leuchte verändert wird. Die Ausgangslichtverteilung wird also nur dann verändert, wenn zwei Bedingungen zutreffen.

Es muss die Qualität der Messsignale unterhalb eines bestimmten Schwellenwerts liegen und die Funktion des Fahrzeugs muss eingeschaltet sein. Die Qualität der Messsignale wird durch das Einschalten der Funktion also plausibilisiert. Dadurch kann vorteilhafterweise die Wahrscheinlichkeit verringert werden, dass die Ausgangslichtverteilung fälschlicherweise verändert wird und andere Verkehrsteilnehmer geblendet werden.

Insbesondere wird die Helligkeit der Lichtverteilung der Leuchte erhöht. Dadurch wird die Sichtbarkeit des Fahrzeugs für entgegenkommende oder auf das eigene Fahrzeug folgende Verkehrsteilnehmer erhöht. Alternativ kann auch die Nebelschlussleuchte zusätzlich eingeschaltet werden.

Bei der erfindungsgemäßen Vorrichtung zum Steuern einer Lichtverteilung einer Leuchte eines Fahrzeugs strahlt die Leuchte eine Ausgangslichtverteilung ab. Die Vorrichtung umfasst ein Fahrerassistenzsystem, eine Recheneinheit und eine Steuervorrichtung. Das Fahrerassistenzsystem umfasst dabei zumindest einen Sensor, der einen optischen Parameter misst und der Messsignale bereitstellt, anhand derer das Fahrerassistenzsystem die Führung des Fahrzeugs auf der Fahrbahn steuert, wobei die Qualität der Messsignale des Sensors durch die Wetterverhältnisse in der Umgebung des Fahrzeugs beeinflusst wird. Weiterhin umfasst die Vorrichtung eine Recheneinheit, die die Qualität der Messsignale ermittelt und mit einem Schwellenwert vergleicht. Eine Steuervorrichtung verändert dann die Ausgangslichtverteilung, wenn die von der Recheneinheit ermittelte Qualität der Messsignale unterhalb des Schwellenwerts liegt. Die erfindungsgemäße Vorrichtung ist insbesondere zum Ausführen des erfindungsgemäßen Verfahrens geeignet und weist somit auch die Vorteile des erfindungsgemäßen Verfahrens auf.

In einer Ausgestaltung des erfindungsgemäßen Verfahrens ist das Fahrerassistenzsystem ein Spurhalteassistent. Da, wie bereits erläutert, der Spurhalteassistent in der Regel bei schlechten Wetterverhältnissen eingeschränkt funktionstüchtig ist, ist es besonders vorteilhaft, die Sensoren des Spurhalteassistenten und die von diesen Sensoren gemessenen optischen Parameter zu verwenden.

In einer anderen Ausgestaltung der erfindungsgemäßen Vorrichtung ist die Steuervorrichtung mit einer Funktion des Fahrzeugs gekoppelt, die eine Sichtbeeinträchtigung durch die Wetterverhältnisse vermindert. Bevorzugt ist diese Funktion eine Scheibenwischerfunktion. Alternativ kann die Funktion auch eine Scheibenheizung sein.

In einer weiteren Ausgestaltung ist die Leuchte der Vorrichtung eine Heckleuchte. Da viele Auffahrunfälle bei schlechten Sichtverhältnissen dadurch ausgelöst werden, dass vorausfahrende Fahrzeuge kaum sichtbar sind, ist es besonders vorteilhaft, die Heckleuchte anzusteuern .

Dadurch kann eine bessere Sichtbarkeit des Fahrzeugs für auf das Fahrzeug folgende Verkehrsteilnehmer hergestellt werden. Alternativ kann die Leuchte aber auch ein Abblendlicht, ein Schlechtwetterlicht, ein Nebelscheinwerfer oder ein Fahrtrichtungsanzeiger sein.

Im Folgenden wird die Erfindung anhand von Ausführungsbeispielen mit Bezug zu den Zeichnungen erläutert.
- Figur 1: zeigt ein Fahrzeug, in dem ein Ausführungsbeispiel der erfindungsgemäßen Vorrichtung zum Steuern einer Lichtverteilung einer Leuchte angeordnet ist, von der Seite,
- Figur 2: zeigt ein Fahrzeug, in dem das Ausführungsbeispiel der erfindungsgemäßen Vorrichtung zum Steuern einer Lichtverteilung einer Leuchte aus Figur 1 angeordnet ist, von vorne,
- Figur 3: zeigt ein Ausführungsbeispiel einer Einteilung des Parameters, sowie einen ermittelten Wert des Parameters und einen Schwellenwert,
- Figur 4: zeigt ein Flussdiagramm eines ersten Ausführungsbeispiels des erfindungsgemäßen Verfahrens und
- Figur 5: zeigt ein Flussdiagramm eines zweiten Ausführungsbeispiels des erfindungsgemäßen Verfahrens.

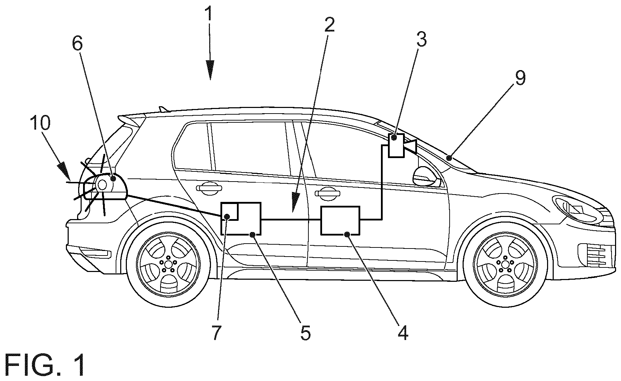

In Figur 1 ist ein Fahrzeug 1, in dem ein Ausführungsbeispiel der erfindungsgemäßen Vorrichtung 2 angeordnet ist, von der Seite gezeigt. Die Vorrichtung 2 umfasst ein Fahrerassistenzsystem, das ein Spurhalteassistent 4 ist. Der Spurhalteassistent 4 umfasst eine Kamera 3, mit welcher Fahrbahnmarkierungen zum Halten der Spur erfasst werden können. Weiterhin umfasst die Vorrichtung 2 eine Steuervorrichtung 5, die mit dem Spurhalteassistenten 4 verbunden ist. In der Steuervorrichtung 5 ist eine Recheneinheit 7 eingebracht. Weiterhin umfasst die Vorrichtung 2 eine Heckleuchte 6.

Die Kamera 3 ist hinter der Frontscheibe 9 des Fahrzeugs 1 angebracht und auf die Fahrbahn vor dem Fahrzeug 1 gerichtet. Die Kamera 3 ist dazu ausgebildet, einen optischen Parameter zu messen, über den die Fahrbahnmarkierungen erkannt werden können. Der optische Parameter kann beispielsweise eine Rückreflexion von Scheinwerferlicht des Fahrzeugs 1 von den Fahrbahnmarkierungen sein. Weiterhin steht die Kamera 3 über den Spurhalteassistenten 4 mit der Steuervorrichtung 5 der Vorrichtung 2 in Verbindung. Die Steuervorrichtung 5 kann insbesondere in Verbindung mit dem Datenbus des Fahrzeugs 1 stehen.

Die Steuervorrichtung 5 ist weiterhin mit der Heckleuchte 6 verbunden. Die Heckleuchte 6 strahlt eine Ausgangslichtverteilung 10 ab. Die Ausgangslichtverteilung 10 ist über die Steuervorrichtung 5 veränderbar.

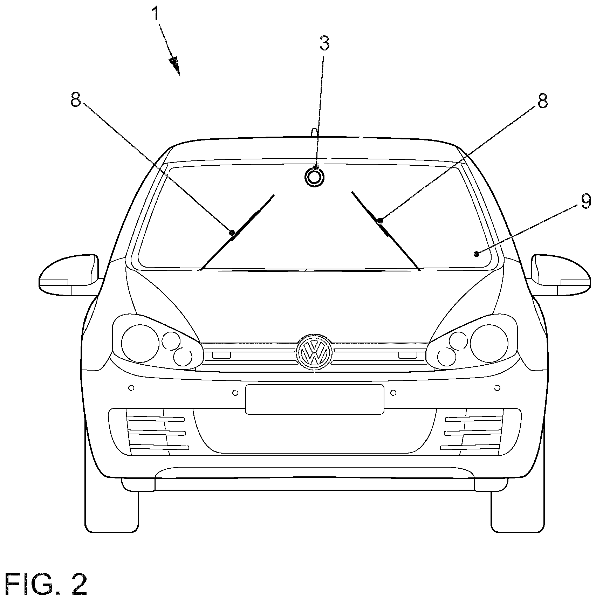

Figur 2 zeigt das Fahrzeug 1 aus Figur 1 von vorne. Die Vorrichtung 2 ist weiterhin über die Steuervorrichtung 5 mit den Scheibenwischern 8 des Fahrzeugs 1 verbunden.

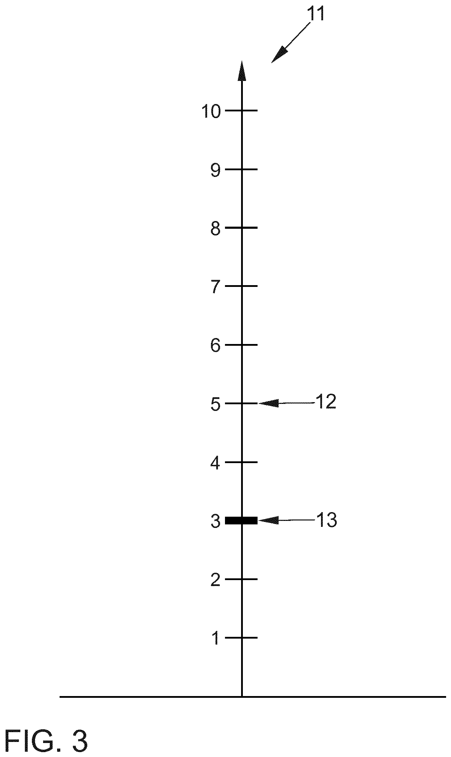

Figur 3 zeigt eine Einteilung der Qualität 13 eines Messsignals 11 auf einer Skala in verschiedene Werte. Die Recheneinheit 7 hat die Aufgabe, die Qualität 13 des Messsignals 11 zu ermitteln. Das Messsignal 11 kann dabei beispielsweise von einer Rückreflexion von emittiertem Scheinwerferlicht des Fahrzeugs 1 von den Fahrbahnmarkierungen stammen. Die Qualität 13 des Messsignals 11 ist die Stärke 13 des Messsignals 11. Die Qualität 13 der Messsignale 11 wird durch die in der Umgebung des Fahrzeugs 1 vorherrschenden Wetterverhältnisse beeinflusst und ist somit unabhängig von der Qualität der Kamera 3.

Wird genügend Licht einer Scheinwerferanordnung des Fahrzeugs 1 entgegen der Fahrtrichtung des Fahrzeugs 1, also in Richtung der Kamera 3, von den Fahrbahnmarkierungen rückreflektiert, so wird diese eindeutig auch als Fahrbahnmarkierung erkannt. Der Spurhalteassistent 4 kann seine Funktion zuverlässig erfüllen.

Bildet sich beispielsweise ein Nebelfeld im Umfeld des Fahrzeugs 1, so wird ein Teil des Lichts der Scheinwerferanordnung des Fahrzeugs 1 bereits zur Kamera 3 zurückreflektiert, bevor es auf die Fahrbahnmarkierungen trifft. Mit zunehmender Dichte des Nebels, wird dieser Anteil des rückreflektierten Lichts immer größer. Ein Messsignal 11 der Fahrbahnmarkierung ist dann immer schwächer zu erkennen. Wird die Stärke 13 des Messsignals 11 der Fahrbahnmarkierung auf einer Skala zwischen eins und zehn eingeteilt, deutet eine niedrige Messsignalstärke 13 dann auf geringes Messsignal 11 von der Fahrbahnmarkierung und eine hohe Messsignalstärke 13 auf ein hohes Messsignal 11 von der Fahrbahnmarkierung hin.
In Figur 3 hat die Recheneinheit 7 eine Messsignalstärke 13 von drei ermittelt. Weiterhin wurde in der Recheneinheit 7 ein Schwellenwert 12 für die Messsignalstärke 13 hinterlegt, ab der der Spurhalteassistent 4 die Fahrbahnmarkierungen nicht mehr eindeutig zur Steuerung der Führung des Fahrzeugs 1 auf der Fahrbahn verwenden kann. In Figur 3 ist der Schwellenwert 12 auf fünf gesetzt. Anhand des Schwellenwerts 12 wird im Verfahren dann festgelegt, ob die Ausgangslichtverteilung 10 der erfindungsgemäßen Vorrichtung 2 verändert wird.

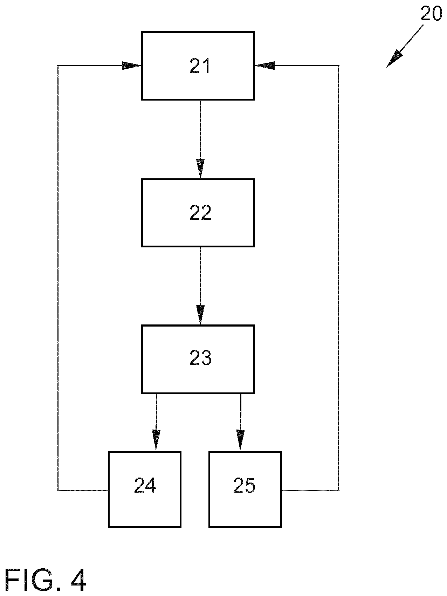

Figur 4 zeigt den Ablauf eines ersten Ausführungsbeispiels des erfindungsgemäßen Verfahrens 20. Das erste Ausführungsbeispiel ist insbesondere mit der erfindungsgemäßen Vorrichtung 2 ausführbar:
Ausgangssituation des erfindungsgemäßen Verfahrens 20 ist, dass die Heckleuchte 6 eine Ausgangslichtverteilung 10 abstrahlt.

Im ersten Schritt 21 des erfindungsgemäßen Verfahrens 20 sendet die Kamera 3 ein Bild der Umgebung des Fahrzeugs 1 an die Recheneinheit 7 der Vorrichtung 2.

Aus dem erfassten Bild der Kamera 3 ermittelt die Recheneinheit 7 mittels Mustererkennung die Fahrbahnmarkierung auf der Fahrbahn im Schritt 22. Dabei verwendet die Recheneinheit 7 von der Fahrbahnmarkierung in Richtung Kamera 3 reflektiertes Licht. Daraus ermittelt die Recheneinheit 7 dann eine Stärke 13 des Messsignals 11, das von der Fahrbahnmarkierung kommt.

Im Schritt 23 vergleicht die Recheneinheit 7 die ermittelte Messsignalstärke 13 mit dem vorher festgelegten Schwellenwert 12. Dabei kann die ermittelte Messsignalstärke 13 unterhalb oder oberhalb des Schwellenwerts 12 liegen.

Liegt die Messsignalstärke 13 unterhalb des Schwellenwerts 12 wird Schritt 25 des Verfahrens 20 eingeleitet. Im Schritt 25 übermittelt die Recheneinheit 7 ein Steuersignal an die Steuervorrichtung 5, die daraufhin Steuersignale, die normalerweise dem Spurhalteassistenten 4 zur Steuerung des Fahrzeugs 1 auf der Fahrbahn zur Verfügung stehen, vom Spurhalteassistenten 4 ableitet, um diese zur Steuerung der Heckleuchte 6 zu verwenden. Die Helligkeit der Ausgangslichtverteilung 10 der Heckleuchte 6 wird von der Steuervorrichtung 5 erhöht. Dadurch wird die Sichtbarkeit des Fahrzeugs 1 für andere Verkehrsteilnehmer erhöht.

Liegt die Messsignalstärke 13 oberhalb des Schwellenwerts, folgt auf Schritt 23 der Schritt 24. Im Schritt 24 wird bei der erstmaligen Durchführung des Verfahrens 20 die Ausgangslichtverteilung 10 beibehalten und das Verfahren 20 von neuem gestartet. Nach der erstmaligen Durchführung des Verfahrens 20 wird im Schritt 24, wenn eine Lichtverteilung mit einer im Vergleich zur Ausgangslichtverteilung 10 erhöhten Helligkeit vorliegt, die Ausgangslichtverteilung 10 wieder hergestellt.

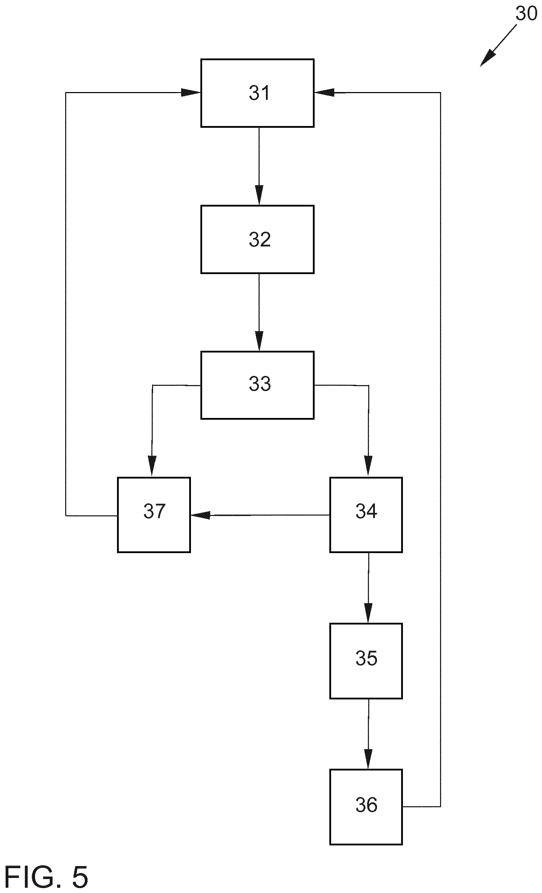

Figur 5 zeigt den Ablauf eines zweiten Ausführungsbeispiels des erfindungsgemäßen Verfahrens 30. Auch das Verfahren 30 ist mit der erfindungsgemäßen Vorrichtung 2 ausführbar:
Auch beim Verfahren 30 ist die Ausgangssituation, dass die Heckleuchte 6 eine Ausgangslichtverteilung 10 abstrahlt.

Schritt 31, 32 und 33 des Verfahrens 30 entsprechen den Schritten 21, 22 und 23 des Verfahrens 20. Wenn die ermittelte Messsignalstärke 13 im Schritt 33 unterhalb des Schwellenwerts 12 liegt wird mit Schritt 34 fortgefahren, ansonsten mit Schritt 37.

Im Schritt 34 wird geprüft, ob beispielsweise aufgrund von Regen- oder Schneefall der Scheibenwischer 8 des Fahrzeugs 1 eingeschaltet ist.

Wenn der Scheibenwischers 8 eingeschaltet ist, fährt das Verfahren 30 mit Schritt 35 fort, in dem die Steuervorrichtung 5 den Spurhalteassistenten 4 abschaltet. Der Schwellenwert 12 wurde dabei derart festgelegt, dass eine Messsignalstärke 13 von der Fahrbahnmarkierung nicht mehr ausreicht, um eine zuverlässige Funktion des Spurhalteassistenten 4 zu gewährleisten. Die Ermittlung der Messsignalstärke 13 durch die Recheneinheit 7 wird also durch den Betrieb des Scheibenwischers 8 plausibilisiert. Bevorzugt erhält der Fahrer des Fahrzeugs 1 einen Hinweis darauf, dass der Spurhalteassistent 4 ausgeschaltet wurde.

In Schritt 36 wird dann die Helligkeit der Heckleuchte 6 erhöht und anschließend das Verfahren 30 von neuem bei Schritt 31 begonnen. Die Ausgangssituation ist nun jedoch, dass die Heckleuchte 6 nicht die Ausgangslichtverteilung 10, sondern eine Lichtverteilung mit erhöhter Helligkeit abstrahlt.

Wird in Schritt 34 festgestellt, dass der Scheibenwischer 8 nicht eingeschaltet ist, wird das Verfahren 30 mit Schritt 37 fortgesetzt. Die Steuervorrichtung 5 geht im Schritt 37 davon aus, dass die Messsignalstärke 13 von der Recheneinheit 7 fehlerhaft ermittelt wurde.
Bei der erstmaligen Durchführung des Verfahrens 30 wird die Ausgangslichtverteilung 10 beibehalten und das Verfahren 30 von neuem begonnen. Nach der erstmaligen Durchführung des Verfahrens 30 wird im Schritt 37, wenn eine Lichtverteilung mit einer im Vergleich zur Ausgangslichtverteilung 10 erhöhten Helligkeit vorliegt, die Ausgangslichtverteilung 10 wieder hergestellt. In beiden Fällen wird der Spurhalteassistent 4 wieder eingeschaltet.

Wird im Schritt 33 festgestellt, dass die Messsignalstärke 13 oberhalb des Schwellenwerts liegt, folgt auf Schritt 33 der Schritt 37. Im Schritt 37 wird bei der erstmaligen Durchführung des Verfahrens 30 die Ausgangslichtverteilung 10 beibehalten und das Verfahren 30 von neuem gestartet. Nach der erstmaligen Durchführung des Verfahrens 30 wird im Schritt 37, wenn eine Lichtverteilung mit einer im Vergleich zur Ausgangslichtverteilung 10 erhöhten Helligkeit vorliegt, die Ausgangslichtverteilung 10 wieder hergestellt.

Alternativ kann auch ein Schwellenwert 12 in der Recheneinheit 7 hinterlegt werden, bei dessen Überschreitung die Nebelschlussleuchte eingeschaltet wird. Der optische Parameter würde dann eine Sichtweite beschreiben. Die Recheneinheit 7 kann dann aus der Messsignalstärke 13 eine Sichtweite. Der Schwellenwert 12 der Sichtweite ist die gesetzlich bestimmte Grenze, ab deren Überschreitung die Nebelschlussleuchte nicht eingeschaltet werden darf.

Die Verfahren 20 und 30 können entweder ständig während des Betriebs der Heckleuchte 6 durchgeführt werden oder in regelmäßigen zeitlichen Abständen wiederholt werden. Auch eine Kombination der Verfahrensschritte der beiden Verfahren 20 und 30 ist ohne Einschränkung möglich.

### Bezugszeichenliste

- 1: Fahrzeug
- 2: Vorrichtung
- 3: Kamera
- 4: Spurhalteassistent
- 5: Steuervorrichtung
- 6: Heckleuchte
- 7: Recheneinheit
- 8: Scheibenwischer
- 9: Frontscheibe
- 10: Ausgangslichtverteilung
- 11: Messsignal
- 12: Schwellenwert
- 13: Messsignalstärke
- 20: Verfahren
- 21-25: Verfahrensschritte
- 30: Verfahren
- 31-37: Verfahrensschritte

## Patentansprüche

1. Verfahren zum Steuern einer Lichtverteilung einer Leuchte (6) eines Fahrzeugs (1), wobei die Leuchte (6) eine Ausgangslichtverteilung (10) abstrahlt, bei dem : - die Ausgangslichtverteilung (10) verändert wird, wenn eine Qualität (13) von Messsignalen (11) unterhalb eines Schwellenwerts (12) liegt,
- ein Fahrerassistenzsystem (4) betrieben wird, das der Führung des Fahrzeugs (1) auf der Fahrbahn dient,
- das Fahrerassistenzsystem (4) zumindest einen Sensor (3) umfasst, der einen optischen Parameter misst und der die Messsignale (11) bereitstellt, wobei anhand der Messsignale (11) das Fahrerassistenzsystem (4) die Führung des Fahrzeugs (1) auf der Fahrbahn steuert, wobei die Qualität (13) der Messsignale (11) des Sensors (3) durch die Wetterverhältnisse in der Umgebung des Fahrzeugs (1) beeinflusst wird,
**dadurch gekennzeichnet, dass**
- das Fahrerassistenzsystem (4) ausgeschaltet wird, wenn die Qualität (13) der Messsignale (11) unterhalb des Schwellenwerts (12) liegt.

2. Verfahren nach Anspruch 1,
**dadurch gekennzeichnet,**
**dass** die Ausgangslichtverteilung (10) dann wieder hergestellt wird, wenn die Qualität (13) der Messsignale (11) wieder oberhalb des Schwellenwerts (12) liegt.

3. Verfahren nach Anspruch 1 und 2,
**dadurch gekennzeichnet,**
- **dass** das Fahrerassistenzsystem (4) mit einer Funktion des Fahrzeugs (1) gekoppelt wird, die eine Sichtbeeinträchtigung durch die Wetterverhältnisse vermindert,
- **dass** die Funktion des Fahrzeugs (1) in Abhängigkeit von den Wetterverhältnissen einschaltbar ist und
- **dass**, wenn die Qualität (13) der Messsignale (11) unterhalb des Schwellenwerts (12) liegt, die Ausgangslichtverteilung (10) nur dann verändert wird, wenn die Funktion eingeschaltet ist.

4. Verfahren nach Anspruch 1 bis 3,
**dadurch gekennzeichnet,**
**dass** die Helligkeit der Ausgangslichtverteilung (10) der Leuchte (6) erhöht wird.

5. Vorrichtung (2) zum Steuern einer Lichtverteilung einer Leuchte (6) eines Fahrzeugs (1), wobei die Leuchte (6) eine Ausgangslichtverteilung (10) abstrahlt, mit
- einer Recheneinheit (7), die die Qualität (13) von Messsignalen (11) ermittelt und mit einem Schwellenwert (12) vergleicht,
- einer Steuervorrichtung (5), die die Ausgangslichtverteilung (10) verändert, wenn die von der Recheneinheit (7) ermittelte Qualität (13) der Messsignale (11) unterhalb des Schwellenwerts (12) liegt, und
- ein Fahrerassistenzsystem (4) das der Führung des Fahrzeugs (1) auf der Fahrbahn dient, wobei das Fahrerassistenzsystem (4) zumindest einen Sensor (3) umfasst, der einen optischen Parameter misst und der die Messsignale (11) bereitstellt, wobei das Fahrerassistenzsystem (4) anhand der Messsignale die Führung des Fahrzeugs (1) auf der Fahrbahn steuert, wobei die Qualität (13) der Messsignale (11) des Sensors (3) durch die Wetterverhältnisse in der Umgebung des Fahrzeugs (1) beeinflusst wird,
**dadurch gekennzeichnet, dass**
das Fahrerassistenzsystem (4) ausgeschaltet wird, wenn die Qualität (13) der Messsignale (11) unterhalb des Schwellenwerts (12) liegt.

6. Vorrichtung (2) nach Anspruch 5,
**dadurch gekennzeichnet,**
**dass** das Fahrerassistenzsystem ein Spurhalteassistent (4) ist.

7. Vorrichtung (2) nach Anspruch 5 und 6,
**dadurch gekennzeichnet,**
**dass** die Steuervorrichtung (5) der Vorrichtung (2) mit einer Funktion des Fahrzeugs (1) gekoppelt ist, die eine Sichtbeeinträchtigung durch die Wetterverhältnisse vermindert.

8. Vorrichtung (2) nach Anspruch 7,
**dadurch gekennzeichnet,**
**dass** die Funktion eine Scheibenwischerfunktion (8) ist.

9. Vorrichtung (2) nach Anspruch 7 und 8,
**dadurch gekennzeichnet,**
**dass** die Leuchte eine Heckleuchte (6) des Fahrzeugs (1) ist.

## Claims

1. Method for controlling a light distribution of a lamp (6) of a vehicle (1), wherein the lamp (6) emits an output light distribution (10), in which:
- the output light distribution (10) is changed if a quality (13) of measurement signals (11) lies below a threshold value (12),
- a driver assistance system (4) that serves to guide the vehicle (1) on the lane is operated,
- the driver assistance system (4) comprises at least one sensor (3) which measures an optical parameter and provides the measurement signals (11), wherein the driver assistance system (4) guides the vehicle (1) on the lane on the basis of the measurement signals (11), wherein the quality (13) of the measurement signals (11) of the sensor (3) is influenced by the weather conditions in the area surrounding the vehicle (1),
**characterized in that**
- the driver assistance system (4) is switched off if the quality (13) of the measurement signals (11) lies below the threshold value (12).

2. Method according to Claim 1, **characterized in that** the output light distribution (10) is restored when the quality (13) of the measurement signals (11) is back above the threshold value (12).

3. Method according to claim 1 and 2, **characterized**
- **in that** the driver assistance system (4) is coupled to a function of the vehicle (1) that reduces a visibility impairment caused by the weather conditions,
- **in that** the function of the vehicle (1) is able to be switched on in dependence on the weather conditions, and
- **in that**, if the quality (13) of the measurement signals (11) lies below the threshold value (12), the output light distribution (10) is changed only when the function is switched on.

4. Method according to Claim 1 to 3, **characterized in that** the brightness of the output light distribution (10) of the lamp (6) is increased.

5. Apparatus for controlling a light distribution of a lamp (6) of a vehicle (1), wherein the lamp (6) emits an output light distribution (10), comprising
- a computational unit (7) that ascertains the quality (13) of measurement signals (11) and compares them to a threshold value (12),
- a control apparatus (5) that changes the output light distribution (10) if the quality (13) of the measurement signals (11) ascertained by the computational unit (7) lies below the threshold value (12), and
- a driver assistance system (4) that serves to guide the vehicle (1) on the lane, wherein the driver assistance system (4) comprises at least one sensor (3) that measures an optical parameter and provides the measurement signals (11), wherein the driver assistance system (4) guides the vehicle (1) on the lane on the basis of the measurement signals, wherein the quality (13) of the measurement signals (11) of the sensor (3) is influenced by the weather conditions in the area surrounding the vehicle (1),
**characterized in that**
the driver assistance system (4) is switched off if the quality (13) of the measurement signals (11) lies below the threshold value (12).

6. Apparatus (2) according to Claim 5, **characterized in that** the driver assistance system is a lane-keep assistant (4).

7. Apparatus (2) according to Claim 5 and 6, **characterized in that** the control apparatus (5) of the apparatus (2) is coupled to a function of the vehicle (1) that reduces a visibility impairment caused by the weather conditions.

8. Apparatus (2) according to Claim 7, **characterized in that** the function is a wiper function (8).

9. Apparatus (2) according to Claim 7 and 8, **characterized in that** the lamp is a tail lamp (6) of the vehicle (1).

## Revendications

1. Procédé de commande d'une distribution de lumière d'un moyen d'éclairage (6) d'un véhicule (1), le moyen d'éclairage (6) émettant une distribution de lumière de sortie (10), procédé dans lequel :
- la distribution de lumière de sortie (10) est modifiée lorsqu'une qualité (13) de signaux de mesure (11) est inférieure à une valeur seuil (12),
- un système d'assistance à la conduite (4) est actionné qui sert à guider le véhicule (1) sur la chaussée,
- le système d'assistance à la conduite (4) comprend au moins un capteur (3) qui mesure un paramètre optique et qui produit les signaux de mesure (11), le système d'assistance à la conduite (4) commandant le guidage du véhicule (1) sur la chaussée sur la base des signaux de mesure (11), la qualité (13) des signaux de mesure (11) du capteur (3) étant influencée par les conditions météorologiques dans l'environnement du véhicule (1),
**caractérisé en ce que**
- le système d'assistance à la conduite (4) est désactivé lorsque la qualité (13) des signaux de mesure (11) est inférieure à la valeur seuil (12).

2. Procédé selon la revendication 1,
**caractérisé en ce que**
la distribution de lumière de sortie (10) est rétablie lorsque la qualité (13) des signaux de mesure (11) est à nouveau au-dessus de la valeur seuil (12).

3. Procédé selon les revendications 1 et 2,
**caractérisé en ce que**
- le système d'assistance à la conduite (4) est accouplé à une fonction du véhicule (1) qui réduit la dégradation de la visibilité due aux conditions météorologiques.
- la fonction du véhicule (1) peut être activée en fonction des conditions météorologiques et
- si la qualité (13) des signaux de mesure (11) est inférieure à la valeur seuil (12), la distribution de lumière de sortie (10) n'est modifiée que lorsque la fonction est activée.

4. Procédé selon les revendications 1 à 3,
**caractérisé en ce que**
la luminosité de la distribution de lumière de sortie (10) du moyen d'éclairage (6) est augmentée.

5. Dispositif (2) de commande d'une distribution de lumière d'un moyen d'éclairage (6) d'un véhicule (1), le moyen d'éclairage (6) émettant une distribution de lumière de sortie (10), ledit dispositif comprenant
- une unité de calcul (7) qui détermine la qualité (13) de signaux de mesure (11) et la compare à une valeur seuil (12),
- un dispositif de commande (5) qui modifie la distribution de lumière de sortie (10) lorsque la qualité (13) des signaux de mesure (11) déterminée par l'unité de calcul (7) est inférieure à la valeur seuil (12) ,
et
- un système d'assistance à la conduite (4) qui sert à guider le véhicule (1) sur la chaussée, le système d'assistance à la conduite (4) comprenant au moins un capteur (3) qui mesure un paramètre optique et qui produit les signaux de mesure (11), le système d'assistance à la conduite (4) commandant le guidage du véhicule (1) sur la chaussée sur la base des signaux de mesure, la qualité (13) des signaux de mesure (11) du capteur (3) étant influencée par les conditions météorologiques dans l'environnement du véhicule (1),
**caractérisé en ce que**
le système d'assistance à la conduite (4) est désactivé lorsque la qualité (13) des signaux de mesure (11) est inférieure à la valeur seuil (12).

6. Dispositif (2) selon la revendication 5,
**caractérisé en ce que**
le système d'assistance à la conduite est un système de détection de dérive (4).

7. Dispositif (2) selon les revendications 5 et 6,
**caractérisé en ce que**
le dispositif de commande (5) du dispositif (2) est couplé à une fonction du véhicule (1) qui réduit la dégradation de la visibilité due aux conditions météorologiques.

8. Dispositif (2) selon la revendication 7,
**caractérisé en ce que**
la fonction est une fonction d'essuie-glace (8).

9. Dispositif (2) selon les revendications 7 et 8,
**caractérisé en ce que**
le moyen d'éclairage est un feu arrière (6) du véhicule (1) .
